# EUROPEAN PATENT APPLICATION

(11) **EP 4 556 263 A1**
(43) Date of publication of application: **21.05.2025**
(21) Application number: 24211337.1
(22) Date of filing: 07.11.2024
(51) Int. Cl.: B60C 23/04, B60C 29/06, B60B 7/00, B60B 7/01, B60B 21/00, B60C 11/00, B60C 13/00

(54) **TIRE, TIRE AND WHEEL COMBINATION, AND RIM VALVE FOT A TIRE**

(30) Priority: 14.11.2023 US 202363598639 P; 18.09.2024 US 202418888908
(71) Applicant: The Goodyear Tire & Rubber Company, Akron, OH 44316 (US)
(72) Inventor: NGO, Frederic, 7562 Mersch (LU); FONTAINE, Sebastien Willy, 9188 Vichten (LU)
(74) Representative: Kutsch, Bernd

(57) **Abstract**

In a first aspect, a tire is disclosed comprising an innerliner adjacent to a first side of a belt package; an undertread adjacent to a second side of the belt package; a tread adjacent to the undertread opposite the belt package, the tread comprising a plurality of tread elements and a plurality of tread grooves; a hole disposed in an individual tread groove of the plurality of tread grooves, the hole extending from an exterior surface of the tread through the undertread and belt package to the innerliner; and a sensor disposed at least in part in the hole. Furthermore, a rim valve for a tire is disclosed, the rim valve comprising: a valve stem including a distal end and a proximal end; a valve bulb disposed at the proximal end of the valve stem; and a sensor disposed on at least one of the valve bulb and the distal end of the valve stem. Finally, a tire and wheel combination is disclosed comprising a tire being mounted on a wheel, wherein the tire includes a plurality of sidewalls, each one of the sidewalls extending radially outwardly from a respective bead to a tread, the tread comprising a plurality of tread elements, and wherein a sensor is disposed on an outboard side of at least one of the wheel and an individual sidewall of the plurality of sidewalls.

## Description

### BACKGROUND

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped unvulcanized tire carcass, which is known in the art at that stage as a green tire, is then inserted into a mold or press for forming of the tread pattern and curing or vulcanization.

Often it is desirable to collect electronic data about the conditions in and around the tire. Such data can be communicated to the various different electronic systems of the vehicle, such as vehicle stability and/or braking systems, in order to provide improved control of the vehicle as well as to monitor or track driving behavior.

### SUMMARY OF THE INVENTION

The invention relates to a tire in accordance with claim 1, to a rim valve for a tire or for use with a tire and wheel combination in accordance with claim 4 and to a tire and wheel combination in accordance with claim 6.

Dependent claims refer to preferred embodiments of the invention.

### BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIG. 1 is a drawing of a vehicle with one or more wheels having tires according to various embodiments of the present disclosure.
FIG. 2 is a combination of perspective cross-sectional views of a tire according to various embodiments of the present disclosure.
FIG. 3 is a combination of perspective views of rim valve designs according to various embodiments of the present disclosure.
FIG. 4 is a combination of perspective views of a wheel center cap according to various embodiments of the present disclosure.
FIG. 5 is a combination of perspective views of a tire according to various embodiments of the present disclosure.
FIG. 6 is a combination of perspective views of a rim cover according to various embodiments of the present disclosure.
FIG. 7 is a combination of perspective views of a wheel according to various embodiments of the present disclosure.

### DEFINITIONS

"Axial" and "axially" mean lines or directions that are parallel to the axis of rotation of the tire.

"Axially inward" and "axially inwardly" refer to an axial direction that is toward the axial center of the tire.

"Axially outward" and "axially outwardly" refer to an axial direction that is away from the axial center of the tire.

"Bead" means that part of the tire comprising an annular tensile member wrapped by ply cords and shaped, with or without other reinforcement elements such as flippers, chippers, apexes, toe guards and chafers, to fit the design rim.

"CAN bus" is an abbreviation for controller area network.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Footprint" means the contact patch or area of contact created by the tire tread with a flat surface, such as the ground, as the tire rotates or rolls.

"Inboard side" means the side of the tire nearest the vehicle when the tire is mounted on a wheel and the wheel is mounted on the vehicle.

"Innerliner" means the layer or layers of elastomer or other material that form the inside surface of a tubeless tire and that contain the inflating fluid within the tire.

"Lateral" means an axial direction.

"Lateral edges" means a line tangent to the axially outermost tread contact patch or footprint as measured under normal load and tire inflation, the lines being parallel to the equatorial centerplane.

"Outboard side" means the side of the tire farthest away from the vehicle when the tire is mounted on a wheel and the wheel is mounted on the vehicle.

"Radial" and "radially" mean lines or directions that are perpendicular to the axis of rotation of the tire.

"Radially inward" and "radially inwardly" refer to a radial direction that is toward the central axis of rotation of the tire.

"Radially outward" and "radially outwardly" refer to a radial direction that is away from the central axis of rotation of the tire.

"TPMS" means a tire pressure monitoring system, which is an electronic system that measures the internal pressure of a tire and is capable of communicating the pressure to a processor that is mounted on the vehicle and/or is in electronic communication with electronic systems of the vehicle.

"Tread element" or "traction element" means a rib or a block element defined by a shape having adjacent grooves.

### DETAILED DESCRIPTION OF PREFERRED EMBODIMENTS OF THE INVENTION

Disclosed herein are various examples related to systems and methods for including sensors, lights, or other functional and aesthetic components on a tire or wheel. Reference will now be made in detail to the description of the embodiments as illustrated in the drawings, wherein like reference numbers indicate like parts throughout the several views.

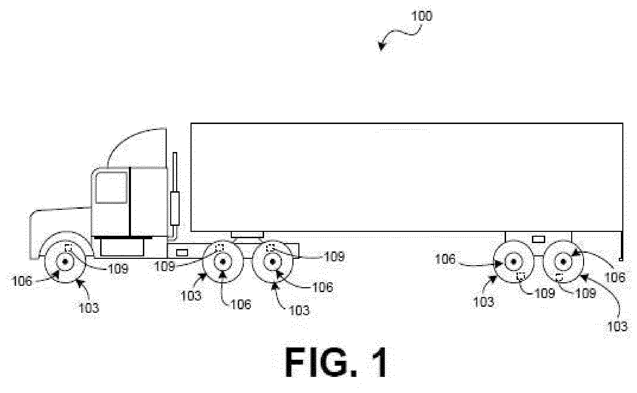

With reference to FIG. 1, a vehicle 100 is shown with one or more tires 103. The tires 103 can be placed on wheels 106. The wheel 106 can include a rim well and two rim sidewalls extending radially outwardly from either side of the rim well. Each tire 103 can include a sensor 109. In some embodiments, the sensor 109 is a component of a tire pressure monitoring system (TPMS), an anti-lock braking system (ABS), a vehicle stability system, a traction control system, or other electronic system of the vehicle 100. The sensor 109 can be a wireless sensor such as, for example, a Bluetooth^{®} low-energy (BLE) sensor, a battery-powered sensor, a piezoelectric sensor, a wired sensor, or another type of sensor.

The sensor 109 can detect certain real-time parameters of the tire 103 and can include a pressure sensor to sense the inflation pressure within a cavity of the tire 103, and a temperature sensor to sense the temperature of the tire 103 and/or the temperature in the cavity of the tire 103. The sensor 109 can comprise a processor and memory to store tire identification (ID) information for each specific tire 103. For example, the tire ID can include manufacturing information for the tire 103, including the tire model; size information, such as rim size, width, and outer diameter; manufacturing location; manufacturing date; a treadcap code that includes or correlates to a compound identification; a mold code that includes or correlates to a tread structure identification, or other information. The tire ID may also include a service history or other information to identify specific features and parameters of each tire 103.

The sensor 109 can further include an antenna for wirelessly transmitting measured parameters and tire ID data to a remote processor for analysis, such as a processor integrated into a vehicle electronic control unit and/or a Controller Area Network (CAN) bus associated with the vehicle 100 (FIG. 1).

According to various embodiments, each one of the tires 103 on the vehicle 100 can include one or more of the sensors 109 and related systems. In some embodiments, the wheel 106 can include one or more indicators 112. The indicators 112 can be representative of a mechanical, electrical, or combination system which indicates different information about the tire 103 and/or the conditions near the tire 103. For example, an indicator 112 can be a light emitting diode (LED) or other light source which is electrically coupled to the sensor 109 and can turn on or off, flash, or change colors depending on the reading of the sensor 109. In another nonlimiting example, an indicator 112 can be a switch configured to switch positions or flip when triggered by the sensor 109. In some examples, the indicator 112 can consist of a speaker which produces a sound, or any other system which can produce a notification or indication of a change in sensor readings. According to various embodiments, the indicator 112 can be electrically coupled to the turn signal of a vehicle 100 such that the indicator 112 also indicates a turn signal. In some embodiments, one or more indicators 112 can be used for aesthetic and customization purposes as a decoration.

While the vehicle 100 is depicted as a commercial truck, the vehicle 100 can comprise any type of vehicle that employs tires where the commercial truck is presented as an example. To this end, the vehicle 100 can comprise other vehicles falling into various categories such as passenger vehicles, off-road vehicles and the like, in which such vehicles include a greater or lesser number of tires 103 than are shown in FIG. 1.

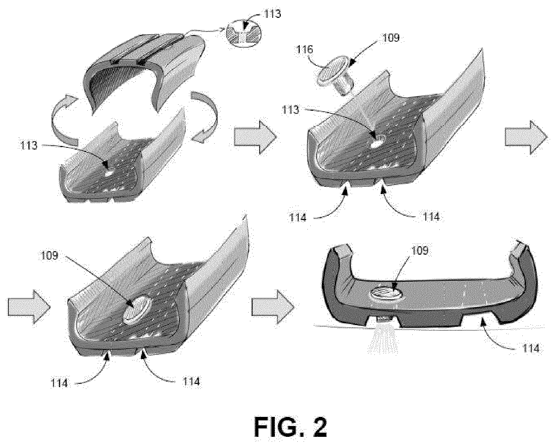

Moving next to FIG. 2, shown are various perspective views of a tire 103 from a vehicle 100 such as that depicted in FIG. 1. The tire 103 can have a hole 113 disposed in a tread groove 114 of the tread. The hole 113 can be representative of a hollow channel or bore through the innerliner, belt package, undertread, as well as other layers of tire components. In some embodiments, the hole 113 can be created in the tire 103 during manufacturing of the tire 103. For example, a pin can be positioned on the inside of the tire drum to create the hole 113 when the tire 103 is inflated during the manufacturing or curing process. Moreover, in some examples, the tire 103 can have multiple holes 113 within a tread groove 114, at least one hole 113 per tread groove 114, multiple holes 113 per tread groove 114, or any other number of holes 113.

As shown in FIG. 2, the hole 113 can be configured to receive a sensor 109. The sensor 109 can be configured to fit inside the hole 113 such that at least a portion of the sensor 109 is exposed through the tread groove 114. In some embodiments, the portion of the sensor 109 exposed through the tread groove 114 is flush with the floor of the tread groove 114 such that the sensor 109 does not interfere with the tread pattern and does not come into contact with the road. The sensor 109 can be configured to sense various conditions outside the tire 103 through the hole 113 such as moisture, temperature, pressure, a wear level of the tread, *etc.* while also configured to sense various conditions inside the tire 103. In some embodiments, the sensor 109 includes a base 116 which is wider than the diameter of the hole 113. The base 116 can be representative of a flange disposed at a first end of the sensor 109. When the sensor 109 is positioned inside the hole 113, the base 116 can be configured to fit against the innerliner of the tire 103 and keep the sensor 109 in the correct position. This "mushroom cap" design can keep the sensor 109 in the correct position in the tire 103 using the air pressure from within the tire 103. In some embodiments, an adhesive, respective threading on the sensor 109 and hole 113, fasteners, or other means can be used to further secure the sensor 109 in the hole 113. In some embodiments, the sensor 109 can be configured to seal the hole 113 such that air, water, debris, or other substance cannot pass through the hole 113. In some embodiments, the base 116 of the sensor 109 can be configured to seal the interior side of the hole 113 such that no air, liquid, debris, or other substance can pass through the hole 113. When a sensor 109 is not placed inside the hole 113, a plug can be inserted to maintain the integrity of the tire 103.

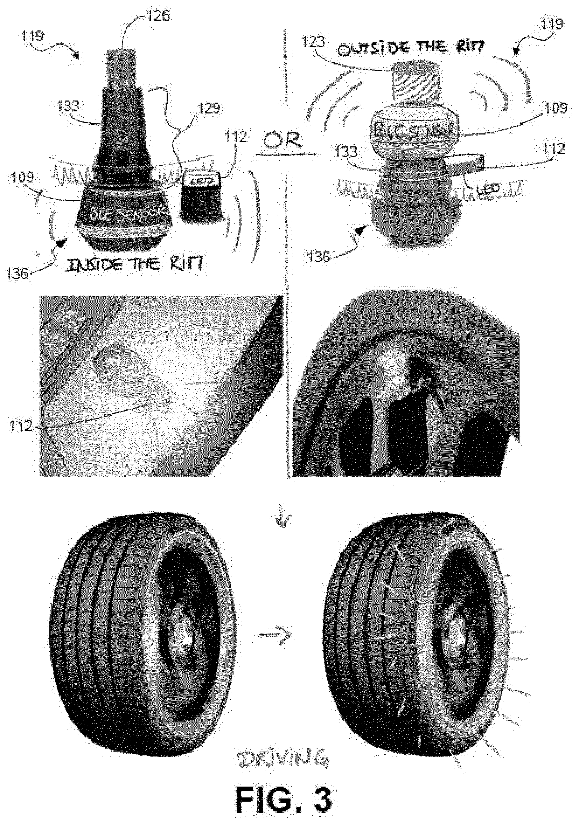

Moving on to FIG. 3, shown are various perspective views of a rim valve 119 for a wheel 106 such as that depicted in FIG. 1. The rim valve 119 can be used to check the air pressure in a tire 103, add air to a tire 103, or release air from a tire 103. In addition, the rim valve 119 can be configured to seal the hole in the rim such that air cannot escape around the rim valve 119. The rim valve 119 can be customized for various flow rates, air pressures, sizes, and materials.

The rim valve 119 can include a valve cap 123, valve core 126, a body 129, and in some embodiments, a sensor 109. The body 129 of the rim valve 119 can include a valve stem 133, or elongated portion housing the valve core 126 and attachable to the valve cap 123, as well as a valve bulb 136 disposed at one end of the valve stem 133. The valve bulb 136 can be positioned on an interior of the rim well, with the valve stem 133 protruding through a hole in the rim. In some embodiments, the valve bulb 136 can include the sensor 109 as well as means to secure the rim valve 119 within the rim. Such means of securing the rim valve 119 can include the structure and shape of the valve bulb 136 (e.g., the valve bulb 136 sized to fit the hole in the rim, threading on the valve bulb 136 to secure the rim valve 119 within the hole, a ridge disposed around the valve bulb 136, *etc*.), a material or substrate to secure the rim valve 119 within the rim (*e.g*., a flexible rubber to seal the hole, an adhesive, an airtight foam, *etc*.), or other means of securing the rim valve 119 within the rim. In some embodiments, the rim valve 119 is integrally molded to the rim. According to various embodiments, a sensor 109 can be included on the valve bulb 136 on an inside of the rim well to sense various conditions on the inside of the tire 103. According to various embodiments, a sensor 109 can be included on the valve stem 133 on an exterior side of the rim well. In such embodiments, when the sensor 109 is exposed to the exterior environment of the wheel 106, data can be collected about the exterior of the wheel 106 and tire 103.

In some embodiments, an indicator 112 can be incorporated onto the rim valve 119. The indicator 112 can be disposed at the distal end of the rim valve 119 outside the rim well. In some embodiments, the indicator 112 can be incorporated into the valve cap 123. In some embodiments, one or more indicators 112 can be disposed on or around the valve stem 133. The indicator 112 can be electrically or mechanically coupled to the sensor 109 and, in some embodiments, configured to produce different indications depending on the readings from the sensor 109. In some embodiments, the indicator 112 can be coupled to other systems in the vehicle and configured to produce different indications depending on the systems involved. For example, an indicator 112 can be coupled to a turn signal of the vehicle 100 and blink or flash in tune with the turn signal. In another non-limiting example, the indicator 112 can be coupled to the brake lights of the vehicle 100 and turn on or off according to the braking system of the vehicle 100. According to some examples, the indicator 112 can be coupled to one or more warning lights on a vehicle 100 and configured to indicate a warning. In further embodiments, the indicator 112 can be configured to transmit and/or receive information to/from similar indicators 112 on other vehicles 100, a reader device, or another system.

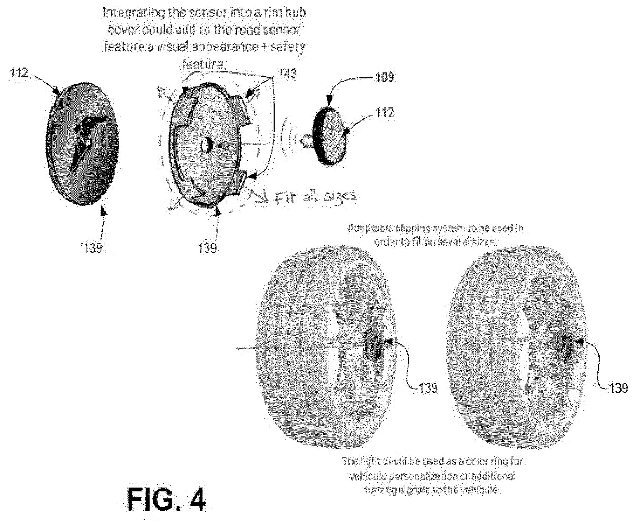

In FIG. 4, shown are multiple perspective views of a wheel center cap 139 according to various embodiments. The wheel center cap 139 can be representative of a hubcap, a center cap, a hub cover, lug nut cover, or other removable cover designed to fit over one or more components at the center of a wheel 106. In some configurations, the wheel center cap 139 can cover the wheel center as well as the lug nuts disposed around the wheel center. In some embodiments, the wheel center cap 139 can be a circular disc as depicted in FIG. 4. However, the wheel center cap 139 can be a variety of shapes and sizes, such as a flat cap in the shape of a square, hexagon, triangle, circle, star, *etc.*, or a three-dimensional shape such as a cube, cone, sphere, or other shape. The wheel center cap 139 can be formed from plastic, metal, alloy, wood, or other material.

The wheel center cap 139 can further include one or more fastening elements 143 configured to secure the wheel center cap 139 to the wheel 106. The fastening elements 143 can be one or more flanges configured to fit into respective slots or holes in the wheel center such that the wheel center cap 139 is secured to the wheel center. The flanges can include a ridge which can be pushed through a respective slot in the wheel and configured to keep the flange from falling out of the slot. In some embodiments, the fastening elements 143 can be threading on the wheel center cap 139 to screw the wheel center cap 139 into or onto a respective threading on the wheel center. In some embodiments, the fastening elements 143 can comprise locks, clasps, snaps, rivets, screws, or other means to secure the wheel center cap 139 to the wheel center. In some embodiments, the wheel center cap 139 can be secured to the wheel 106 using the lug nuts.

According to various examples, the wheel center cap 139 includes an integrated sensor 109. The sensor 109 can be configured to at least measure data from the environment on the exterior of the wheels 106 and transmit the data back to an electronic system of the vehicle 100. In some embodiments, one or more indicators 112 can be incorporated into the wheel center cap 139. The one or more indicators 112 can be disposed in a center of the wheel center cap 139, disposed around the exterior of the wheel center cap 139, or otherwise placed on, in, or around the wheel center cap 139. In some embodiments, the one or more indicators 112 can be coupled to the sensor 109 or another electronic or electrical system of the vehicle 100 and configured to indicate various states based on signals received from such systems.

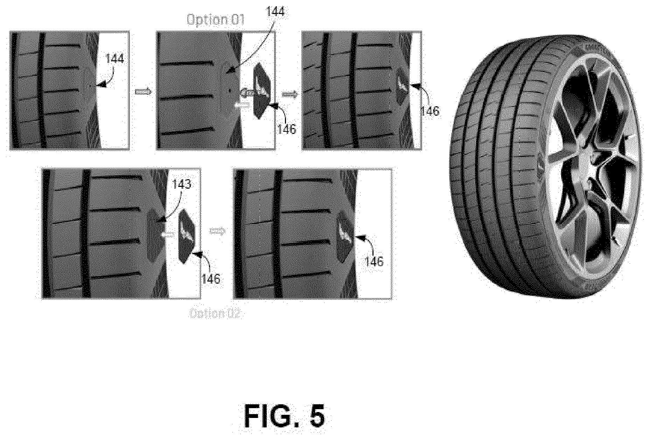

Moving next to FIG. 5, shown are various perspective views of an example tire 103 according to various embodiments. A tire 103 can be produced which has a recess 144 or pocket in an outboard side of a sidewall. In some embodiments, the recess 144 is formed in the sidewall of the tire 103 during the manufacturing of the tire 103. In some embodiments, the recess 144 is stamped, pressed, cut, or otherwise formed after the tire 103 has been produced. While FIG. 5 depicts one shape of the recess 144, the recess 144 can be any shape or size configured to receive a sensor 109, a decorative patch 146, an indicator 112, or other functional or aesthetic element. For example, the recess 144 could be in the shape of a circle, square, triangle, rectangle, hexagon, octagon, *etc.* In some embodiments, the recess 144 is a few millimeters deep (approximately 0.5-5 millimeters, 5-10 millimeters, or 10-15 millimeters, depending on the thickness of the sidewall and the size of the patch).

In some embodiments, the recess 144 is configured to receive a sensor 109. The sensor 109 can be configured to fit the shape of the recess 144 and fit within the recess 144 such that an exterior surface of the sensor 109 is flush, or nearly flush, with the outboard side of the sidewall. The exterior surface of the sensor 109 can be used to collect data from the environment surrounding the tire 103. The sensor 109 can be included in a patch 146 made of rubber, plastic, metal, or other material, which fits into the recess 144. In some embodiments, the patch 146 can include an elongated member configured to fit within a receiving hole in the recess 144. As depicted in the top row of images in FIG. 5, the elongated member of the patch 146 can be plugged into the receiving hole in the recess 144 to be secured to the sidewall. In some embodiments, the patch 146 can include an adhesive on an internal side such that when the patch 146 is fitted into the recess 144, the adhesive is in contact with the recess 144 and secures the patch 146 in place. In some embodiments, depicted in the bottom row of images in FIG. 5, an adhesive is disposed with the recess 144 of the sidewall and secures the patch 146 in place. According to various examples, other means of securing the patch 146 into the recess 144 can be used such as, for example, threading, one or more fasteners, snaps, locks, push tabs, or other means.

According to various embodiments, the outer surface of the patch 146 can include one or more decorative features as well as functional features. The patch 146 can include one or more indicators 112 disposed on the outer surface of the patch 146. The indicators 112 can be electrically coupled to a sensor 109 within the patch 146 or another electronic or electrical system of the vehicle 100. In some embodiments, the patch 146 can be customizable and include lights, printed decor, stitching, or other accessories.

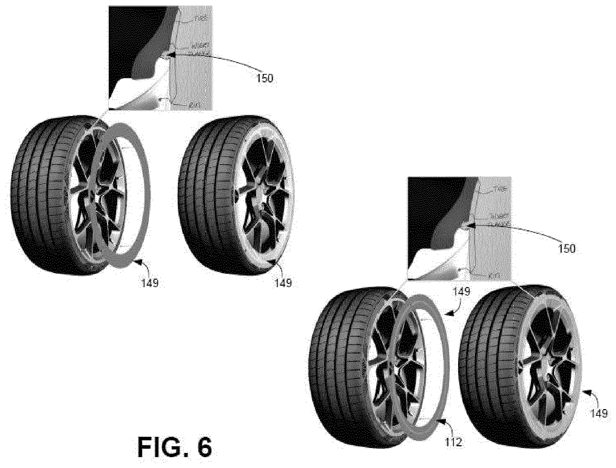

At FIG. 6, shown are various perspective views of a rim protector 149. The rim protector 149 can be representative of various devices configured to cover some or all of a rim of a wheel 106 as depicted in FIG. 1. In some embodiments, the rim protector 149 is a ring configured to fit around a rim of a wheel 106, wherein the ring has an inboard side configured to face the rim and an outboard side configured to face an environment exterior to the wheel. The rim protector 149 can be an annular ring as depicted in FIG. 6 but can also be formed in another geometric shape sized to cover at least a portion of the rim of a wheel 106. In some embodiments, the rim protector 149 includes one or more flanges 150 extending in an inboard direction from the inboard side of the rim protector 149 and configured to secure the rim protector 149 to the rim. These flanges 150 can be disposed at a location on the inboard side of the rim which aligns with the outermost lip of the rim sidewall adjacent to the tire 103. The flanges 150 can be configured to fit between the rim sidewall and the sidewall of the tire 103. In some embodiments, the flanges 150 can be representative of one or more ridges which extend circumferentially about the perimeter of the rim protector 149. In some embodiments, the flanges 150 can be a plurality of tabs or pins extending from the inboard side of the rim protector. According to various examples, the flanges 150 can be configured to fit into respective slots within the rim or, in some embodiments, the flanges 150 can be configured to fit between the tire 103 and the rim.

The outboard surface of the rim protector 149 can extend in a radially outward direction as well as a radially inward direction. Thus, the rim protector 149 can be sized such that at least a portion of the rim protector 149 covers the sidewall of the tire 103 and/or at least a portion of the rim protector 149 covers the sidewall of the rim. The rim protector 149 can be configured to extend radially inward such that the rim protector 149 covers a majority of the outboard side of the wheel.

The rim protector 149 can also include various functional and aesthetic accessories, such as sensors 109, indicators 112, decorations, or other components. In some embodiments, the rim protector 149 includes one or more sensors 109 disposed periodically about the outboard surface of the rim protector 149 and configured to collect data about the environment of the wheel 106 and to transmit the data to another system. In some embodiments, one or more indicators 112 are disposed about the outboard surface of the rim protector 149. Various customizable options may also be available for the design and accessorizing of the rim protector 149. In some embodiments, the rim protector 149 can further serve to reduce drag and enhance the aerodynamics of the wheel 106.

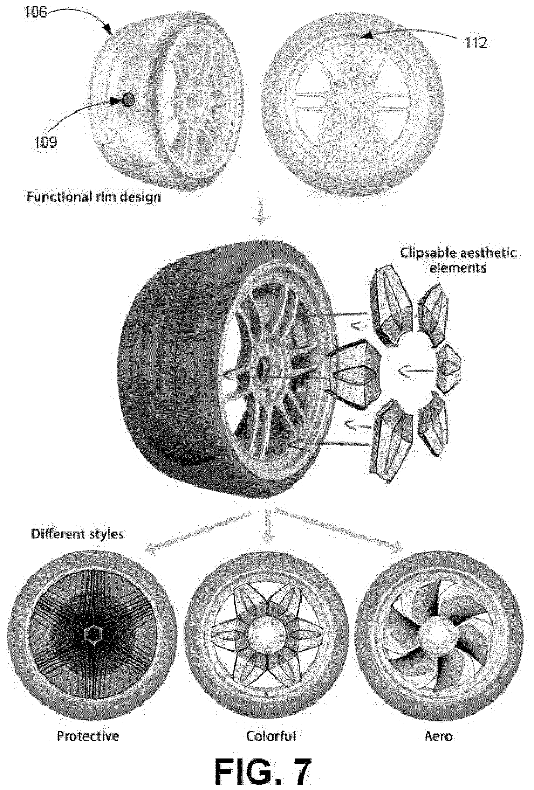

Moving next to FIG. 7, shown are various perspective views of a wheel 106. The wheel 106 can comprise a wheel body having a rim well formed between an outboard rim sidewall and an inboard rim sidewall. The wheel 106 can include one or more spokes or surfaces within the circumference of the wheel 106. In some embodiments, the wheel 106 includes a sensor 109. The sensor 109 can be disposed on a radially inward side of the rim well, an exterior of the outboard rim sidewall, on a spoke or surface at the center of the wheel 106, or at another location on the wheel 106. According to various examples, the sensor 109 is embedded in the wheel 106, integrally molded to a surface of the wheel 106, or otherwise attached to the wheel 106. The sensor 109 can be configured to collect and transmit data from the wheel environment as well as, in some embodiments, the interior or exterior of the tire 103.

In some embodiments, the wheel 106 includes one or more connectors disposed about the outboard face of the wheel 106. The connectors can be representative of slots, snaps, holes, threaded holes, or other means configured to receive and secure accessories to the outboard face of the wheel 106. The connectors can be disposed on the outboard face of the wheel 106, on the spokes of the wheel 106, on the outboard sidewall of the rim, or on another exterior surface of the wheel 106. In some embodiments, the connectors are configured to receive a hubcap, a wheel center cap, a rim protector, spoke cover, or other customizable member. According to various examples, the accessories which can be attached to the connectors are representative of protective covers, customizable aesthetic accessories, or elements to enhance the aerodynamics and/or performance of the wheel 106.

In addition to the foregoing, the various embodiments of the present disclosure include, but are not limited to, the embodiments set forth in the following clauses.

Clause 1 - A tire, comprising an innerliner adjacent to a first side of a belt package; an undertread adjacent to a second side of the belt package; a tread adjacent to the undertread opposite the belt package, the tread comprising a plurality of tread elements and a plurality of tread grooves; a hole disposed in an individual tread groove of the plurality of tread grooves, the hole extending from an exterior surface of the tread through the undertread and belt package to the innerliner; and a sensor disposed at least in part in the hole.

Clause 2 - The tire of clause 1, wherein the sensor further comprises a base, the base being wider than a diameter of the hole and disposed at a proximal end of the sensor such that the base is adjacent to the innerliner.

Clause 3 - The tire of clauses 1 or 2, further comprising a plurality of holes disposed within the plurality of tread grooves; and a plurality of sensors, individual sensors of the plurality of sensors disposed in respective individual holes of the plurality of holes.

Clause 4 - A method, comprising providing a hole in a tread groove of a tire, the hole extending from an interior side of the tire through to an exterior side of the tread groove; and inserting a sensor into a tread groove of a tire, the sensor having an elongated member extending through the hole and a base disposed at a first end of the elongated member.

Clause 5 - A rim valve for a tire, the rim valve comprising a valve stem having a distal end and a proximal end; a valve bulb disposed at the proximal end of the valve stem; and a sensor disposed on the valve bulb.

Clause 6 - The rim valve of clause 5, further comprising an indicator disposed at the distal end of the valve stem, the indicator being electronically connected to the sensor and configured to indicate an activated state of the sensor.

Clause 7 - The rim valve of clause 5 or 6, wherein the indicator comprises one or more LED lights.

Clause 8 - A rim valve for a tire, the rim valve comprising a valve stem having a distal end and a proximal end; a valve bulb disposed at the proximal end of the valve stem; and a sensor disposed at the distal end of the valve stem.

Clause 9 - The rim valve of clause 8, further comprising an LED disposed adjacent to the sensor at the distal end of the valve stem.

Clause 10 - The rim valve of clause 8 or 9, further comprising an indicator disposed around the valve stem, the indicator being electronically connected to the sensor and configured to indicate an activated state of the sensor.

Clause 11 - The rim valve of clause 10, wherein the indicator comprises one or more LEDs.

Clause 12 - A wheel center cap, comprising a center member having a first surface and one or more fastening members disposed about a periphery of the first surface, the one or more fastening members configured to secure the wheel center cap to a center of a wheel; a sensor disposed on the first surface of the center member; and an indicator disposed on the center member.

Clause 13 - The wheel center cap of clause 12, wherein the center member comprises a disc.

Clause 14 - The wheel center cap of clause 12 or 13, wherein the one or more fastening members comprise one or more flanges, individual flanges of the one or more flanges having a ridge disposed at a distal end of the flange and being configured to secure inside a respective hole in the center of the wheel.

Clause 15 - The wheel center cap of any of clauses 12-14, wherein the sensor protrudes from a hole in the first surface of the center member.

Clause 16 - The wheel center cap of any of clauses 12-15, wherein the indicator is disposed in a center of the first surface of the center member.

Clause 17 - The wheel center cap of any of clauses 12-16, wherein the indicator comprises one or more LEDs.

Clause 18 - The wheel center cap of clause 17, wherein the one or more LEDs are disposed around the periphery of the first surface of the center member.

Clause 19 - A tire, comprising a plurality of sidewalls, each one of the sidewalls extending radially outwardly from a respective bead to a tread, the tread comprising a plurality of tread elements; and a recess in an outboard side of an individual sidewall of the plurality of sidewalls, the recess configured to receive a sensor.

Clause 20 - The tire of clause 19, wherein the recess further comprises a hole disposed in the recess of the individual sidewall, the hole configured to receive a push-plug of the sensor.

Clause 21 - The tire of clause 19 or 20, further comprising an adhesive disposed within the recess of the individual sidewall.

Clause 22 - The tire of any of clauses 19-21, further comprising the sensor disposed in the recess, the sensor configured to fit within the recess such that an exterior surface of the sensor is flush with the outboard side of the individual sidewall.

Clause 23 - The tire of clause 22, further comprising one or more LEDs integrated into the exterior surface of the sensor.

Clause 24 - The tire of clause 22 or 23, wherein the sensor further comprises a push-plug extension configured to fit within a hole disposed in the recess of the individual sidewall.

Clause 25 - The tire of any of clauses 22-24, wherein the sensor further comprises an adhesive on an interior side of the sensor, the adhesive configured to secure the sensor within the recess of the individual sidewall.

Clause 26 - An apparatus, comprising a ring configured to fit around a rim of a wheel, the ring having an inboard side configured to face the rim and an outboard side; and one or more flanges extending in an inboard direction from the inboard side of the ring and configured to secure the ring to the rim.

Clause 27 - The apparatus of clause 26, wherein the one or more flanges extend circumferentially about the ring.

Clause 28 - The apparatus of clause 26, wherein the one or more flanges are spaced periodically about a circumference of the ring.

Clause 29 - The apparatus of any of clauses 26-28, wherein the outboard side of the ring extends radially inward such that the ring covers at least a portion of the rim.

Clause 30 - The apparatus of any of clauses 26-29, wherein the outboard side of the ring extends radially outward such that the ring covers at least a portion of a sidewall of a tire on the wheel.

Clause 31 - The apparatus of any of clauses 26-30, further comprising one or more LEDs disposed on the outboard side of the ring.

Clause 32 - A wheel for a tire, comprising a wheel body having a rim well formed between an outboard rim sidewall and an inboard rim sidewall; a sensor disposed on a radially inward side of the rim well; and one or more connectors disposed circumferentially about an outboard face of the outboard rim sidewall, the one or more connectors configured to secure at least one customizable member to an outboard side of the wheel body.

Clause 33 - The wheel of clause 32, further comprising one or more LEDs disposed on the radially inward side of the rim well.

Clause 34 - The wheel of clause 32 or 33, further comprising one or more LEDs disposed on the outboard face of the outboard rim sidewall.

Clause 35 - The wheel of any of clauses 32-34, wherein the at least one customizable member comprises a spoke cover or a hubcap.

In the present disclosure, disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

## Claims

1. A tire, comprising an innerliner adjacent to a first side of a belt package; an undertread adjacent to a second side of the belt package; a tread adjacent to the undertread opposite the belt package, the tread comprising a plurality of tread elements and a plurality of tread grooves; a hole disposed in an individual tread groove of the plurality of tread grooves, the hole extending from an exterior surface of the tread through the undertread and belt package to the innerliner; and a sensor disposed at least in part in the hole.

2. The tire of claim 1, wherein the sensor further comprises a base, the base being wider than a diameter of the hole and disposed at a proximal end of the sensor such that the base is adjacent to the innerliner.

3. The tire of claim 1 or 2, further comprising: a plurality of holes disposed within the plurality of tread grooves; and a plurality of sensors, individual sensors of the plurality of sensors disposed in respective individual holes of the plurality of holes.

4. A rim valve for a tire or a tire and wheel combination, the rim valve comprising: a valve stem including a distal end and a proximal end; a valve bulb disposed at the proximal end of the valve stem; and a sensor disposed on at least one of the valve bulb and the distal end of the valve stem.

5. The rim valve of claim 4, further comprising an indicator disposed at the distal end of the valve stem, the indicator being electronically connected to the sensor and configured to indicate an activated state of the sensor, wherein the indicator preferably comprises one or more LED lights.

6. A tire and wheel combination comprising a tire being mounted on a wheel, wherein the tire includes a plurality of sidewalls, each one of the sidewalls extending radially outwardly from a respective bead to a tread, the tread comprising a plurality of tread elements, and wherein a sensor is disposed on an outboard side of at least one of the wheel and an individual sidewall of the plurality of sidewalls.

7. The tire and wheel combination of claim 6, further comprising a wheel center cap, the wheel center cap including a center member including a first surface and one or more fastening members disposed about a periphery of the first surface, wherein the one or more fastening members are configured to secure the wheel center cap to a center of the wheel, and wherein the sensor is disposed on the first surface of the center member and an indicator is disposed on the center member.

8. The tire and wheel combination of claim 7, wherein the one or more fastening members comprise one or more flanges, wherein individual flanges of the one or more flanges include a ridge disposed at a distal end of the flange and are configured to be secured inside a respective hole in the center of the wheel, and, optionally, wherein the sensor protrudes from a hole in the first surface of the center member.

9. The tire and wheel combination of at least one of the claims 6 to 8, wherein the indicator is disposed in a center of the first surface of the center member and comprises one or more LEDs; and/or wherein a recess is formed in the outboard side of the individual sidewall of the plurality of sidewalls and the recess is configured to receive the sensor.

10. The tire and wheel combination of claim 9, wherein the recess further comprises a hole disposed in the recess of the individual sidewall, the hole being configured to receive a push-plug of the sensor.

11. The tire and wheel combination of at least one of the claims 6 to 10, further comprising one or more LEDs integrated into the exterior surface of the sensor.

12. The tire and wheel combination of at least one of the claims 6 to 11, further comprising:
a ring configured to fit around a rim of the wheel, the ring including an inboard side configured to face the rim and an outboard side; and
one or more flanges extending in an inboard direction from the inboard side of the ring and configured to secure the ring to the rim.

13. The tire and wheel combination of claim 12, wherein the outboard side of the ring extends radially inward such that the ring covers at least a portion of the rim and the outboard side of the ring extends radially outward such that the ring covers at least a portion of the individual sidewall of the plurality of sidewalls; and/or wherein the tire and wheel combination further comprises one or more LEDs disposed on the outboard side of the ring.

14. The tire and wheel combination of at least one of the claims 6 to 13, wherein:
the wheel includes a wheel body including a rim well formed between an outboard rim sidewall and an inboard rim sidewall;
the sensor is disposed on a radially inward side of the rim well; and
one or more connectors are disposed circumferentially about an outboard face of the outboard rim sidewall, the one or more connectors being configured to secure at least one customizable member to an outboard side of the wheel body, the at least one customizable member preferably comprising a spoke cover or a hubcap.

15. The tire and wheel combination of claim 14, further comprising one or more LEDs disposed on at least one of the radially inward side of the rim well and the outboard face of the outboard rim sidewall.
